# EUROPEAN PATENT APPLICATION

(11) **EP 2 511 083 A1**
(43) Date of publication of application: **17.10.2012**
(21) Application number: 11162406.0
(22) Date of filing: 14.04.2011
(51) Int. Cl.: B29C 70/48, B29C 70/54

(54) **Method for manufacturing a work piece by vacuum assisted resin transfer moulding**

(71) Applicant: SIEMENS AKTIENGESELLSCHAFT, 80333 München (DE)
(72) Inventor: Grove-Nielsen, Erik, 7870, Roslev (DK)

(57) **Abstract**

A method for manufacturing a work piece (1) by Vacuum Assisted Resin Transfer Moulding is described. The method comprises the steps of placing fibre rovings (13) in a mould of a closed mould system which comprises a mould cavity, placing at least one resin distribution means (14, 17, 18, 25) between the fibre rovings (13), applying vacuum to the closed mould system and injecting resin into the mould cavity.

## Description

The present invention relates to a method for manufacturing a work piece by vacuum assisted resin transfer moulding, especially to a method for manufacturing a wind turbine rotor blade. It further relates to a work piece, for example, a wind turbine rotor blade.

Fibre reinforced plastic composites are used in a variety of technical products such as cars, wind turbine blades, storage tanks etc. Most products of big size, such as wind turbine blades are manufactured by placing woven glass fabric, delivered on rolls, into one or more moulds. In the common resin injection process known as VARTM (vacuum assisted resin transfer moulding), the moulds are closed, and vacuum is applied to the closed mould system. A resin, such as polyester, epoxy, vinyl ester or other, is then injected into the mould cavity, thus filling the space between the fibres in the laminates.

In load bearing structures, a unidirectional glass fabric is often used. The glass fibre rovings in the fabric may be stitched together using yarns of polyester or similar material. When the weave is later impregnated with resin, either by vacuum infusion or by hand layup, the stitching, by tightening the glass fibre bundles, induces areas between the glass bundles with resin rich areas, with almost no glass fibres. The stitching also induces unwanted waviness in the fibre bundles. It is desirable to obtain an even distribution of the glass fibres, without pockets of resin rich areas. A standard fabrication utilizing woven fabrics and chopped strand mats does not solve this problem. Furthermore, manufacturing using woven 2-D fabrics delivered in rolls, for building up 3-D structures in a mould is difficult to automate.

In a wind turbine blade, the so called spar cap areas should contain material with the highest achievable lengthwise stiffness, which is most often obtained by placing unidirectional (UD) fabrics here. The pockets between the rovings, created by the stitching, are normally used as resin flow channels. When placing roving material without stitching, other means of resin transport channels has to be established.

For achieving high strength, an increased number of unidirectional fibre layers are being placed. Special stitching patterns have been introduced, in order to reduce the resin rich pockets in the laminate, but the limitations have always been the inherited expensive textile machinery used in the weaving fabrication. This machinery is very similar to the machinery used in non glass textile industry. It has not been developed with the aim of solving problems in the fibre reinforced plastics industry.

It is a first objective of the present invention to provide an improved method for manufacturing a work piece by vacuum assisted resin transfer moulding, which reduces resin rich pockets in the laminate. It is a second objective of the present invention to provide an improved work piece with reduced resin rich pockets in the laminate.

The first objective is solved by a method for manufacturing a work piece as claimed in claim 1. The second objective is solved by a work piece as claimed in claim 14. The depending claims define further developments of the present invention.

The inventive method for manufacturing a work piece by vacuum assisted resin transfer moulding comprises the step of placing fibre rovings in a mould of a closed mould system. The closed mould system comprises a mould cavity. The inventive method further comprises the steps of placing at least one resin distribution means between a roving fibres, applying vacuum to the close mould system and injecting resin into the mould cavity.

Using fibre rovings and placing resin distribution means between the fibre rovings has the advantage, that a faster impregnation of the fibres can be achieved, due to a proper combination of vacuum channels and capillary forces. Moreover, the resin distribution means or resin rich flow channels can be placed so that they do not impair the strength of the item. By means of the inventive method laminates with extremely high stiffness (E-modulus) can be fabricated.

The used fibre rovings typically contain thousands of single fibres. The fibre rovings can be placed in longitudinal direction of the structure or work piece, which can be a wind turbine rotor blade. Furthermore, the fibre rovings can be placed alongside each other.

Preferably, the rovings are not stitched together in the form of a fabric. This yields high density of the roving area but does not leave areas for resin flow. A number of slots or flow enhancing means of flow channels may be placed between the fibre rovings as resin distribution means.

The resin distribution means may for example be a flow enhancing means or a resin transport means, which accommodates the resin flow for the impregnation of the fibres in the surrounding rovings. The resin distribution means or flow enhancing means or resin transport means may have a higher permeability for liquid resin flow than the longitudinal unidirectional fibres of the rovings. Using longitudinal unidirectional fibres in form of fibre rovings, which are placed in a mould a long side each other instead of woven fabrics, the production costs of the work piece can be reduced and resin rich areas can be avoided.

In the context of the present invention a number of porous yarns and/or a number of fibrous yarns and/or at least one permeable tube and/or at least one resin flow channel can be placed between the fibre rovings as resin distribution means. Preferably, the resin distribution means, for example, the slots, may be filled with a porous material and/or with a fibrous material.

Advantageously, the resin distribution means can be placed between the fibre rovings at predefined distances from each other. This ensures a uniform resin distribution in the laminate. For example, every layer of roving that is placed can contain for every 10 rovings a flow enhancing means, for instance a porous yarn.

The used mould can comprise an inner mould surface. The resin distribution means can preferably be placed perpendicular to the inner mould surface. Moreover, the mould can comprise a longitudinal direction. The longitudinal direction may correspond to a longitudinal direction of the work piece. In this case the fibre rovings may be placed in longitudinal direction of the mould.

By placing the resin transport slots in lengthwise direction, which may be the main force direction, and perpendicular to the mould surface, especially for a wind turbine blade spar cap area, the low fibre content area of the cured slot will not impair the flap wise stiffness or strength of the blade. If the channel were placed in parallel with the outer shell of the spar cap, this could result in shear failures caused by flap wise loads. As the spar cap area is in, or near to the neutral zone for edgewise load cases, there are only small shear forces present. Thus the channels do not impair the edgewise strength either.

The used fibre rovings may comprise a number of longitudinal unidirectional fibres. The used fibre rovings may, for example, comprise a number of glass fibres and/or carbon fibres and/or aramid fibres and/or basalt fibres and/or natural fibres and/or bamboo strips and/or wood strips. The natural plant fibres may be made from wood or plants.

Regarding the used resin, for example, polyester resin or epoxy resin or vinyl ester resin may be injected into the mould cavity.

Generally, the resin distribution means can be prepared as vertical flow channel with respect to an inner mould surface. The vertical flow channels may be prepared by placing a preassembled stitched fabric tape or a strip of chopped strand mat or a unifilo mat or a porous mat perpendicular to the inner mould surface. In this case the resin can be transported in a separate narrow channel, perpendicular to the mould surface. The distances between the resin transport channels, or more generally the distances between the resin transport channels, or more generally the distances between the resin distribution means, are preferably chosen so as to enable the capillary forces of the roving area to further transport the resin into the roving laminate in due time for the production in question.

The resin distribution means or flow channels may, for example, be constructed by overlaying a number of porous yarns. Preferably, a number of roving layers can be placed in the mould onto each other. Each roving layer may advantageously comprise a number of porous yarns at predefined distances from each other.

A resin distribution means or resin flow channel can be constructed in a way that allows the resin to be drained from the resin distribution means or channel, by means of capillary forces from the roving area. Either the empty channel space can then be a porous structure, resembling a sandwich foam material, or the resin distribution means or channel can be made collapsible. The collapse could for example be initiated by elevated temperatures, a higher vacuum level or other controlled physical changes. Generally, a collapsible resin distribution means can be used.

The inventive work piece is manufactured by the previously described inventive method. The work piece may especially be a wind turbine rotor blade. Generally, the inventive work piece has the same advantages as the previously described method. For instance, in the inventive work piece resin rich areas or resin rich pockets are reduced and the work piece can be manufactured at reduced costs.

Further features, properties and advantages of the present invention will become clear from the following description of an embodiment in conjunction with the accompanying drawings. The described features are advantageous separate or in any combination with each other.
- Figure 1: schematically shows a rotor blade in a plan view on the plane defined by the blade's span and the blade's chord.
- Figure 2: schematically shows a chord-wise cross section through the rotor blade's airfoil section.
- Figure 3: schematically shows a chord-wise cross section of the wind turbine rotor blade.
- Figure 4: schematically shows part of the spar cap 12 of figure 3 in detail.
- Figure 5: schematically shows a number of unidirectional glass fibre rovings, which may be placed in a mould.
- Figure 6: schematically shows the construction of a flow channel by a number of overlaid porous yarns.

- Figure 7: schematically shows how the resin migrates into the laminate.
- Figure 8: schematically shows a sectional view of a number of rovings with a collapsible vertical flow channel.
- Figure 9: schematically shows a sectional view of a number of rovings with a collapsible vertical flow channel.

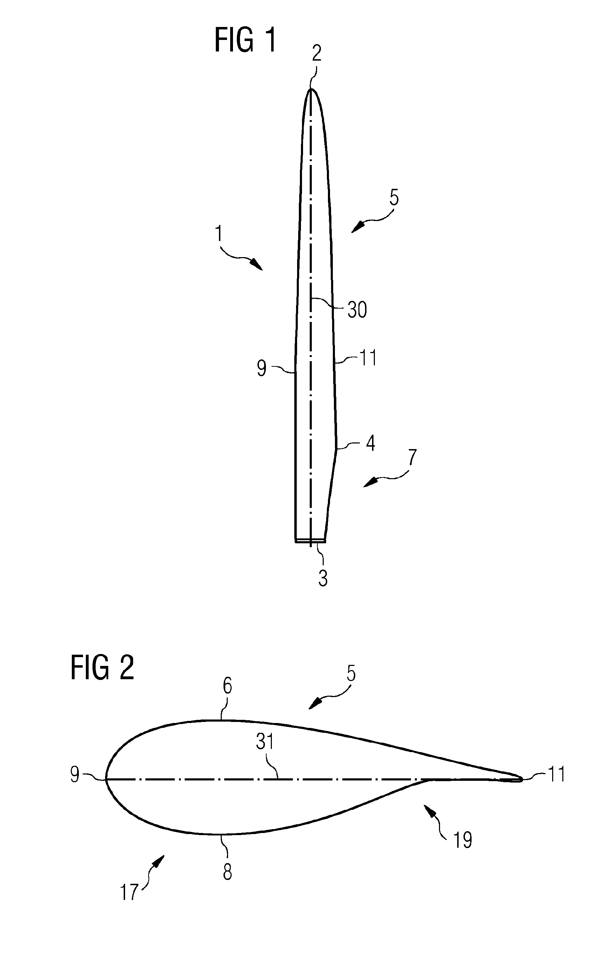

Embodiments of the present invention will now be described with reference to figures 1 to 9.

Figure 1 shows a rotor blade in a plan view on the plane defined by the blade's span and the blade's chord. The span direction is indicated by reference numeral 30. The rotor blade 1 shown in Figure 1 comprises a root portion 3 with a cylindrical profile and a tip 2. The tip forms the outermost part of the blade. The cylindrical profile of the root portion 3 serves to fix the blade to a bearing of a rotor hub. The rotor blade 1 further comprises a so-called shoulder 4 which is defined as the location of its maximum profile depth, i.e. the maximum chord length of the blade. Between the shoulder 4 and the tip 2 an airfoil portion 5 extends which has an aerodynamically shaped profile. Between the shoulder 4 and the cylindrical root portion 3, a transition portion 7 extends in which a transition takes place from the aerodynamic profile of the airfoil portion 5 to the cylindrical profile of the root portion 3.

A chord-wise cross section through the rotor blade's airfoil section 5 is shown in Figure 2. The chord direction is indicated by reference numeral 31. The aerodynamic profile shown in Figure 2 comprises a convex suction side 6 and a less convex pressure side 8. The dash-dotted line extending from the blade's leading edge 9 to its trailing edge 11 shows the chord of the profile. Although the pressure side 8 comprises a convex section 10 and a concave section 19 in Figure 2, it may also be implemented without a concave section at all as long as the suction side 6 is more convex than the pressure side 15.

The suction side 6 and the pressure side 8 in the airfoil portion 5 will also be referred to as the suction side and the pressure side of the rotor blade 1, respectively, although, strictly spoken, the cylindrical portion 3 of the blade 1 does not show a pressure or a suction side.

For manufacturing a work piece, for example a wind turbine rotor blade, by means of Vacuum Assisted Resin Transfer Moulding (VARTM) fibre material, for example a number of unidirectional fibre layers and/or a number of fibre rovings, is placed in a mould shell. A mould core can be placed onto the fibre material. Then the mould can be closed and vacuum can be applied to the closed mould cavity. Then, resin, such as polyester resin, epoxy resin, vinyl ester or other resin, can be injected into the mould cavity, filing the space between the fibres in the laminate.

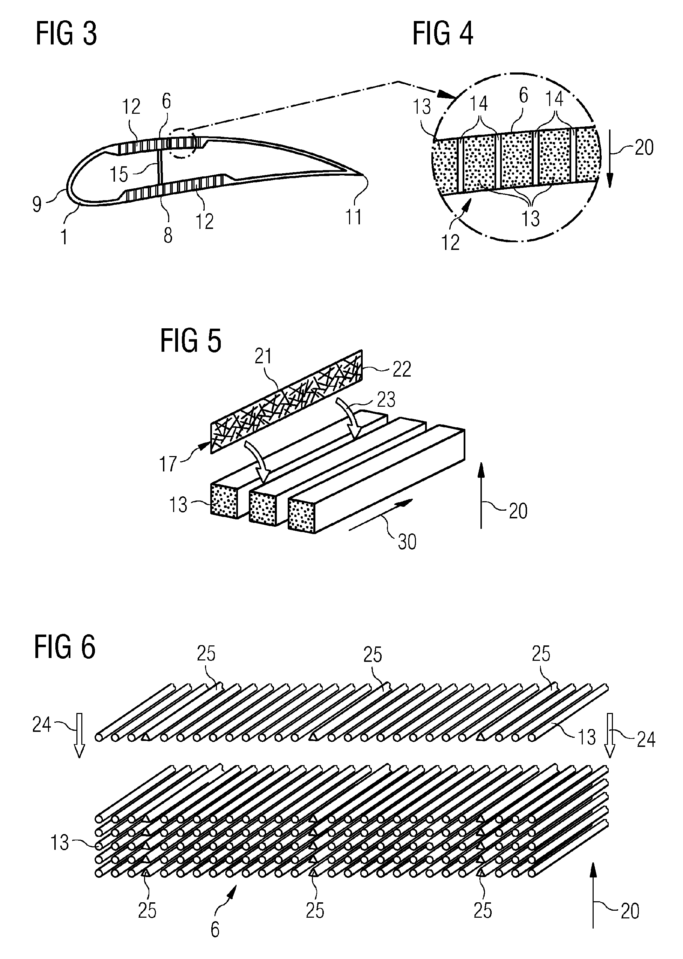

Figure 3 schematically shows a wind turbine rotor blade in a sectional view in cord-wise direction. The wind turbine rotor blade 1 comprises a shear web 15 which connects the suctions side 6 and the pressure side 8 of the blade 1 with each other. The shear web 15 stabilises the rotor blade in span direction. For further stabilising the rotor blade 1, the inner surfaces of the rotor blade 1 at the suction side 6 and at the pressure side 8 close to the shear web 15 comprises a spar cap 12. At the position of the spar cap 12 the shell forming the rotor blade 1 has an increased thickness compared with other positions of the wind turbine rotor blade shell.

Figure 4 schematically shows part of the spar cap 12 of figure 3 in detail. The spar cap 12 comprises a number of unidirectional glass fibre rovings 13. The glass fibre rovings 13 are oriented parallel to the span direction 30 of the rotor blade. A number of resin flow channels 14 are placed between the glass fibre rovings 13. The resin flow channels 14 are oriented vertically to the surface of the rotor blade 1. The surface of the rotor blade may be the outer surface at the suction side 6 or at the pressure side 8. The outer surface of the rotor blade 1 corresponds to the inner mould surface of the mould which was used to manufacture the wind turbine rotor blade 1 by means of vacuum assisted resent transfer moulding. The vertical direction regarding the inner mould surface or the surface of the rotor blade 1 at the suction side is designated by an arrow 20 in figure 4.

Preferably, at certain intervals in the roving laminate 13 a slot 14 perpendicular or vertical to the inner mould surface or outer blade surface is left open between the roving fibres 13. The slot 14 may be filed with a porous material or a fibrous material that provides a resin flow channel 14. When the flow channel 14 is filed with resin, the resin will migrated to the roving area 13 by means of capillary forces and will fill up the space between the fibres 13. The longitudinal fibres 13 can be glass fibres, carbon fibres, aramid fibres, basalt fibres, natural plant fibres or even bamboo strips or other wood strips.

By placing the resin transport slots in lengthwise direction (main force direction) and perpendicular to the mould surface, especially for a wind turbine blade spar cap area, the low fibre content area of the cured slot will not impair the flap wise stiffness or strength of the blade. If the channel were placed in parallel with the outer shell of the spar cap, this could result in shear failures caused by flap wise loads. As the spar cap area is in, or near to the neutral zone for edgewise load cases, there are only small shear forces present. Thus the channels do not impair the edgewise strength either.

Figure 5 schematically shows a number of unidirectional glass fibre rovings 13, which may be placed in a mould. At certain intervals between the unidirectional glass fibre rovings 13 a flow channel 17, consisting of chopped strand mats or other porous sheet is placed. The chopped strand mats or other porous sheet 17 comprises a length side 21, corresponding to the length of the sheet 17, and a width side 22, corresponding to the width of the sheet 17. The flow channel 17 is placed between the glass fibre rovings 12 such that the width side 22 runs parallel to the vertical direction 20. The length side 21 runs parallel to the span direction 30 of the wind turbine rotor blade 1.

Generally, the vertical flow channel 14, 17 may be prepared by placing a preassembled stitched fabric tape, a strip of chopped strand mats, a unifilo mat, or other porous mat, perpendicular or vertical to the mould surface or to the outer surface of the wind turbine rotor blade 1. In figure 5 the placing of the chopped strand mat 17 between the fibrous rovings 13 is indicated by arrows 23.

Alternatively, the flow channel 14 can also be constructed by a number of overlaid porous yarns 25. This is schematically shown in figure 6. In figure 6 a number of rovings 13 are placed in a mould 32 onto each other in form of layers.

The placement of the layers onto each other is indicated by arrows 24. Every layer of roving 13 that is placed can contain, for example for every 10 rovings 13, a porous yarn 25. The porous yarns 25 are placed in a vertical line. The vertical direction is shown by an arrow 20. The porous yarn 25 can be made of any form of fibres, including glass, carbon, aramid, basalt or natural fibres from wood or planes, or other material.

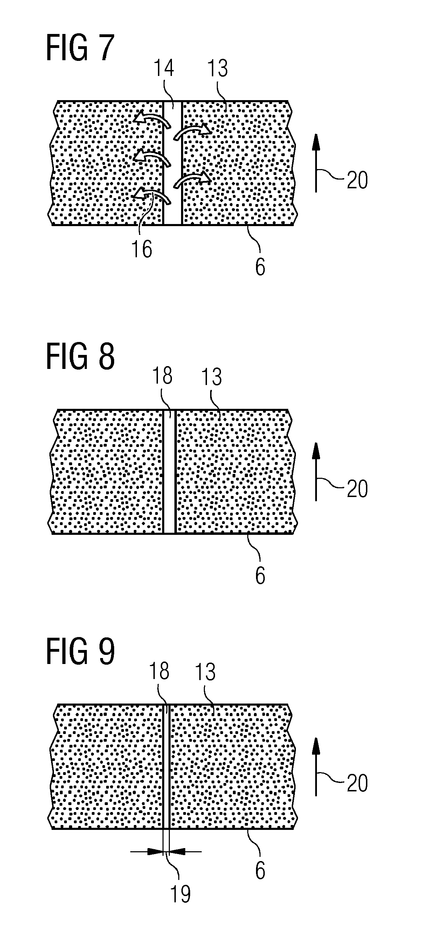

Figure 7 schematically shows how the resin migrates into the laminate. Figure 7 shows a number of glass fibre rovings 13 and a vertical flow channel 14 between the glass fibre rovings 13, as previously described. When resin is injected during the process of vacuum assisted resin transfer moulding, the resin is transported through the flow channels 14 by applying vacuum. The resin is further transported in the glass roving laminate 13 by capillary forces and vacuum. The migration of the resin into the laminate 13 is designated by arrows 16.

Generally, the resin flow channel 14 can be constructed in a way that allows the resin to be drained from the channel 14, by means of capillary forces from the roving area 13. Either the empty channel space can then be a porous structure, resembling a sandwich foam material, or the channel 14 can be made collapsible. This is shown in figures 8 and 9.

Figures 8 and 9 schematically show a sectional view of a number of glass fibre rovings 13 with a vertical flow channel 18 between the glass fibre rovings 13. Figure 8 shows the glass rovings 13 placed in a mould shell before applying vacuum and injecting resin. Figure 9 shows the glass fibre rovings 13 placed in a mould shell after applying vacuum and after injecting resin into the laminate. The vertical flow channel 18 in figure 9 is collapsed. This is indicated by arrows 19. The collapse can be, for example, initiated by elevated temperatures, a higher vacuum level or other controlled physical changes.

## Claims

1. A method for manufacturing a work piece (1) by Vacuum Assisted Resin Transfer Moulding, comprising the steps of placing fibre rovings (13) in a mould of a closed mould system which comprises a mould cavity, placing at least one resin distribution means (14, 17, 18, 25) between the fibre rovings (13), applying vacuum to the closed mould system and injecting resin into the mould cavity.

2. The method as claimed in claim 1,
**characterised in**
placing a number of slots or flow enhancing means or flow channels between the fibre rovings as resin distribution means (14, 17, 18, 25).

3. The method as claimed in claim 1 or 2,
**characterised in**
filling the resin distribution means (14, 17, 18, 25) with a porous material and/or with a fibrous material.

4. The method as claimed in any of the claims 1 to 3,
**characterised in**
placing the resin distribution means (14, 17, 18, 25) between the fibre rovings (13) at predefined distances from each other.

5. The method as claimed in any of the claims 1 to 4,
wherein the mould comprises an inner mould surface, and **characterised in** placing the resin distribution means (14, 17, 18, 25) perpendicular to the mould surface.

6. The method as claimed in any of the claims 1 to 5,
wherein the mould comprises a longitudinal direction corresponding to a longitudinal direction (30) of the work piece (1), and **characterised in** placing the fibre rovings (13) in longitudinal direction of the mould.

7. The method as claimed in any of the claims 1 to 6,
**characterised in**
using fibre rovings (13) comprising a number of longitudinal unidirectional fibres.

8. The method as claimed in any of the claims 1 to 7,
**characterised in**
using fibre rovings (13) comprising a number of glass fibres and/or carbon fibres and/or aramid fibres and/or basalt fibres and/or natural fibres and/or bamboo strips and/or wood strips.

9. The method as claimed in any of the claims 1 to 8,
**characterised in**
injecting polyester resin, epoxy resin, vinylester resin into the mould cavity.

10. The method as claimed in any of the claims 1 to 9,
**characterised in**
preparing the resin distribution means (14, 17, 18, 25) as vertical flow channel with respect to an inner mould surface by placing a preassembled stitched fabric tape or a strip of chopped strand mat (17) or a unifilo mat or a porous mat perpendicular to the inner mould surface.

11. The method as claimed in any of the claims 1 to 10,
**characterised in**
constructing the resin distribution means by overlaying a number of porous yarns (25).

12. The method as claimed in any of the claims 1 to 11,
**characterised in**
placing a number of roving layers onto each other, each roving layers comprising a number of porous yarns (25) at predefined distances from each other.

13. The method as claimed in any of the claims 1 to 12,
**characterised in**
using a collapsible channel (18) as resin distribution means.

14. A work piece (1) which is manufactured by a method as claimed in any of the claims 1 to 13.

15. The work piece as claimed in claim 14,
**characterised in that**
the work piece is a wind turbine rotor blade (1).
